(19) **Europäisches Patentamt**
**European Patent Office**
**Office européen des brevets**

(11) **EP 2 066 914 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(21) Anmeldenummer: **07820191.0**

(22) Anmeldetag: **13.09.2007**

(51) Int Cl.:
**F16D 65/14** $^{(2006.01)}$

(86) Internationale Anmeldenummer:
**PCT/EP2007/059665**

(87) Internationale Veröffentlichungsnummer:
**WO 2008/037602 (03.04.2008 Gazette 2008/14)**

(54) **SPIELFREIER ANTRIEB FÜR EINE ELEKTROMECHANISCHE BREMSVORRICHTUNG**

PLAY-FREE DRIVE FOR AN ELECTROMECHANICAL BRAKE DEVICE

ENTRAÎNEMENT SANS JEU POUR UN DISPOSITIF DE FREINAGE ÉLECTROMAGNÉTIQUE

(84) Benannte Vertragsstaaten:
**DE FR HU IT**

(30) Priorität: **28.09.2006 DE 102006046030**

(43) Veröffentlichungstag der Anmeldung:
**10.06.2009 Patentblatt 2009/24**

(73) Patentinhaber: **Continental Automotive GmbH**
**30165 Hannover (DE)**

(72) Erfinder:
• **BAIER-WELT, Christian**
**64372 Ober-Ramstadt (DE)**

• **SCHAUTT, Martin**
**80636 München (DE)**

(56) Entgegenhaltungen:
**WO-A-03/056204**

• **BEITZ ET AL.: "Dubbel Taschenbuch für den Maschinenbau" 1978, SPRINGER-VERLAG , BERLIN HEIDELBERG NEW YORK , XP002463491 Seite G49; Abbildung 4c**

**Beschreibung**

Die Erfindung betrifft eine elektromechanische Keilbremse. Die Erfindung bezieht sich insbesondere auf die Übertragung von Kräften zwischen einem Aktuator und einer aktiven Keilplatte einer selbstverstärkenden elektromechanischen Keilbremse.

Bei konventionellen Scheibenbremsen beruht die Entwicklung eines Bremsmoments auf der direkten Erzeugung einer großen Zuspannkraft zwischen zwei oder mehreren Bremsklötzen. Bei selbstverstärkenden elektromechanischen Keilbremsen ist die in die Bremse eingebrachte Kraft dagegen geringer als die erreichte Zuspannkraft.

Die Kraft wird bei diesem Bremsentyp von einem Elektromotor eingebracht, der einen als aktive Keilplatte ausgebildeten Bremsklotz verschiebt. Der Bremsklotz ist im Allgemeinen über ein Wälzlager an einer zweiten, passiven Keilplatte so abgestützt, dass ihn sein Verschieben schräg zu dem abzubremsenden Gegenstand, beispielsweise einer Bremsscheibe, hinführt. Wird der Bremsklotz in Laufrichtung des abzubremsenden Gegenstands zu diesem hingeführt, so wird er von diesem Gegenstand in dessen Bewegungsrichtung mitgenommen. Bei geeigneter Neigung der auf den Keilplatten ausgebildeten Keilflächen wird das Reibglied durch diese Mitnahme weiter an den abzubremsenden Gegenstand heran gezogen, wodurch sich die Bremswirkung des als Aktuator wirkenden Elektromotors verstärkt. Dieser Effekt ist allgemein als Selbstverstärkung bekannt. Eine mathematische Behandlung des Selbstverstärkungseffekts ist beispielsweise in der Patentschrift EP 0 953 785 angegeben. Demnach erniedrigt sich die für eine bestimmte Bremskraft $F_B$ - das ist die am Reibglied entstehende Reibkraft - von dem Elektromotor in die Keilanordnung einzubringende Kraft $F_M$ nach der Gleichung:

$$F_M = F_B \cdot [(\tan\alpha - \mu)/\mu]; \tag{1}$$

worin $\alpha$ den Winkel der Keilfläche mit der Bewegungsebene angibt und $\mu$ die Reibungszahl für das Stoffpaar Reibungsbelag/Oberfläche des abzubremsenden Gegenstands bedeutet.

Aus Gleichung (1) ergibt sich der Selbstverstärkungsfaktor C* der Keilbremse zu:

$$C* = F_B/F_M = \mu/(\tan\alpha - \mu); \tag{2}$$

Für $(\tan\alpha - \mu) > 0$ nimmt C* positive Werte ein. Der als Bremsaktuator dienende Elektromotor muss daher eine Verschiebekraft aufbringen, die den Bremsklotz zum abzubremsenden Gegenstand hinführt. Es liegt somit eine Schubsituation vor.

Für $(\tan\alpha - \mu) < 0$ nimmt C* negative Werte ein. Der als Bremsaktuator dienende Elektromotor muss daher eine Verschiebekraft aufbringen, die den Bremsklotz vom abzubremsenden Gegenstand wegführt. Es liegt somit eine Zugsituation vor.

$$\text{Für } (\tan\alpha - \mu) = 0 \text{ nimmt } C*$$

keinen definierten Wert ein.

Um ein Blockieren der Bremsen sicher zu vermeiden müsste daher die Keilbremse nach Gleichung (2) in genügendem Abstand unterhalb der durch den kritischen Wert von $\mu = \tan\alpha$ charakterisierten Asymptote betrieben werden. Damit würde die erzielbare Selbstverstärkung der Keilbremse jedoch gering. In der Praxis hat sich jedoch gezeigt, dass es auch bei Erreichen des kritischen Werts von $\mu = \tan\alpha$ zu keiner absoluten Blockade der Keilbremse kommt.

Dass die Bremse beim Übergang von der Schub- zur Zugsituation in der Praxis nicht blockiert, ist der verwendeten Regelungsanordnung und den Trägheiten in den Kraftübertragungen zwischen dem abzubremsenden Gegenstand und dem als Bremsaktuator dienenden Elektromotor geschuldet. Die Steuerung der Bremskraft erfolgt mithilfe des als Aktuator dienenden Elektromotors. Dieser bewirkt die Verschiebung der aktiven Keilplatte in eine Position, bei der eine, im Wesentlichen durch die relative Lage der Keilplatten zueinander und die Federwirkung des Bremssattels bestimmte, Zuspannkraft erzeugt wird. Ist der Sollwert der Zuspannkraft erreicht, ändert sich nicht die Position der aktiven Keilplatte sondern die von dem Aktuator einzubringende Kraft $F_M$. Bei der für elektromechanische Keilbremsen verwendeten Regelschleife wird die Kraftregelung eines konventionellen Bremsaktuators durch eine Geschwindigkeits- bzw. Positionsregelung des Antriebs für die aktive Keilplatte erweitert, wobei diese Regelung die Drehgeschwindigkeit des Elektromotors so verändert, dass die dem Sollwert der Zuspannkraft entsprechende Position der Keilplatten eingestellt und erhalten bleibt. Ist demnach der Sollwert der Zuspannkraft erreicht, erhält der Geschwindigkeitsregler der Regelungsanordnung den Sollwert "Null". Er hält damit die Position der Keilplatte auch dann konstant, wenn der Belagreibwert $\mu$ bzw. die Kraft $F_B$ oszilliert.

Ein Betrieb der Keilbremse um den durch die Asymptote von C* gekennzeichneten Betriebspunkt ist dadurch praktisch möglich. Da in diesem Bereich eine sehr hohe Selbstverstärkung der Keilbremse vorliegt, kann die Bremse mit sehr geringen, vom Bremsaktuator aufzubringenden Kräften betrieben werden.

Allerdings kehrt sich die Richtung der von dem Aktuator aufzubringenden Kraft bei jedem Überqueren der Asymptote um. Daher muss die von dem Elektromotor des Aktuators in die Keilbremsanordnung eingebrachte Kraft bidirektional geregelt werden können, wobei die Regelung aufgrund der Bidirektionalität und der hohen Dynamik des Systems nach Gleichung (2) mit ausreichend kurzer Ansprechzeit realisiert werden muss.

Eine entsprechende dynamische bidirektionale Regelung bedingt bei Betriebbedingungen der Bremse um den, durch $(\tan\alpha - \mu) = 0$ gekennzeichneten Betriebspunkt herum eine oszillierende Krafteinwirkung auf einen, zur Kraftübertragung zwischen Bremsaktuator und aktiver Keilplatte erforderlichen Koppelmechanismus. Um eine verzögerungsfreie.Richtungsänderung der an die aktive Keilplatte eingebrachten Kraft zu ermöglichen, muss der Koppelmechanismus im Wesentlichen spielfrei ausgeführt sein.

Das Koppelungselement kann dabei nicht starr ausgeführt sein. Zwar verlaufen die auf den Koppelmechanismus wirkenden Kräfte bei einer Ausrichtung des Kopplungselements parallel zur Neigung der Keilflächen in den Keilplatten im Rahmen einer Vorwärtsbremsung parallel zur Verbindungsachse des Koppelmechanismus. Bei einer Rückwärtsbremsung jedoch, bei der die Bewegung des abzubremsenden Gegenstands relativ gegen die Verschiebung des Bremsklotzes erfolgt, treten am Koppelungsmechanismus Querkräfte auf, die eine Auslenkung des Koppelmechanismus quer zu dessen Verbindungsachse erfordern, damit auf die Verbindung zum Aktuator keine zerstörerisch wirkenden Zwangskräften ausgeübt werden.

Um den beiden Anforderung nach Spielfreiheit und dem Zulassen einer begrenzten Relativbewegung in einer Richtung senkrecht zur Verbindungsachse des Koppelmechanismus zu genügen, werden Koppelmechanismen mit Trennfugen oder Schlitzführungen verwendet. Die Spielfreiheit kann hierbei jedoch nur kostenintensiv mit hochgenauen Schlitzpassungen oder mit einem zweiten Motor gewährleistet werden, s.z.B. WO 03/056204.

Andere Ansätze verwenden Koppelstangen mit zwei spielfrei einzustellenden Wälz- oder Gleitlagern. Entsprechende Ausführungen sind jedoch voluminös und teuer, und bergen darüber hinaus das Risiko, dass die Lager aufgrund der hohen auf die Koppelstangen einwirkenden Druckkräfte mit der Zeit ausschlagen und die Regelungsgenauigkeit der Bremskraft damit herabsetzen. Außerdem ist die Steifigkeit der Anordnung bei kleinen Kräften gering, wodurch die Regelgüte der Bremse schon im Normalzustand relativ gering ausfällt.

Ausgehend hiervon liegt der Erfindung die Aufgabe zugrunde, einen Koppelmechanismus für eine elektromechanische Bremse anzugeben, der kostengünstig hergestellt werden kann, ein geringes Volumen einnimmt, eine Auslenkung senkrecht zu seiner Verbindachse zulässt aber gleichzeitig in Richtung der Verbindungsachse auch bei hohen Druckkräften steif genug ist, um eine hohe Regelgüte der Bremse zu gewährleisten.

Diese Aufgabe ist erfindungsgemäß durch die Merkmale des unabhängigen Patentanspruchs gelöst.

In diesem Zusammenhang wird darauf hingewiesen, dass die in dieser Beschreibung und den Ansprüchen zur Aufzählung von Merkmalen verwendeten Begriffe " umfassen", "aufweisen", "beinhalten" und "mit", sowie deren grammatikalischen Abwandlungen, generell das Vorhandensein von Merkmalen, wie z.B. Verfahrensschritten, Einrichtungen, Bereichen, Größen und dergleichen mehr angeben, jedoch in keiner Weise das Vorhandensein anderer oder zusätzlicher Merkmale oder Gruppierungen von anderen oder zusätzlichen Merkmalen ausschließen.

Die Erfindung umfasst eine elektromechanische Bremsvorrichtung mit einem Antrieb, der zum Umwandeln elektrischer Energie in eine mechanische Linearbewegung ausgebildet ist, mit einer aktiven Keilplatte, sowie einer passiven Keilplatte, die mit dem elektrischen Antrieb in einer feststehenden Anordnung verbunden ist, und mit einem oder mehreren Wälzkörpern, die so zwischen der aktiven Keilplatte und der passiven Keilplatte angeordnet sind, dass sie jeweils einander gegenüber angeordnete Keilflächen der aktiven und der passiven Keilplatte berühren. Zur Übertragung der von dem Antrieb erzeugten Linearbewegung auf die aktive Keilplatte ist hierbei zwischen dem Antrieb und der aktiven Keilplatte eine Kopplungsvorrichtung angeordnet, die zumindest ein Festkörperelement mit einem ersten, zur Befestigung an dem Antrieb ausgebildeten Ende und einem zweiten, zur Verbindung mit der Keilplatte ausgebildeten Ende umfasst. Das Festkörperelement weist ferner einen ersten Bereich oder mehrere erste Bereiche mit einem Querschnitt auf, dessen Steifigkeit in einer ersten Richtung wesentlich kleiner ist als dessen Steifigkeit in einer zweiten, im wesentlichen senkrecht zur ersten Richtung angeordneten Richtung.

Die Kopplungsvorrichtung wirkt als Festkörpergelenk zwischen Antrieb und Keilplatte und nimmt aufgrund ihres einfachen Aufbaus nur einen geringen Bauraum ein. Sie gewährleistet einerseits die erforderliche große Steifigkeit bei Zug- und Druckkräften, die axial zu ihrer Verbindungsachse verlaufen und ist andererseits elastisch gegenüber Krafteinwirkungen, die in einer Richtung senkrecht zu ihrer Verbindungsachse auf sie einwirken. Die große Steifigkeit in axialer bzw. in Längsrichtung der Kopplungsvorrichtung ermöglicht hierbei eine spielfreie Übertragung der Kräfte zwischen Antrieb und aktiver Keilplatte und damit eine hohe Regelgüte der elektromechanischen Bremsanordnung, in der eine entsprechende Kopplungsvorrichtung verwendet wird.

Die Erfindung wird in ihren Unteransprüchen weitergebildet.

Um die Knicklast des Festkörperelements zu erhöhen, weist das Festkörperelement vorteilhaft einen weiteren Bereich auf, dessen Steifigkeit in der ersten Richtung größer ist, als es die Steifigkeit des Festkörperelements in dieser Richtung in dem einen ersten Bereich oder den mehreren ersten Bereichen ist. Um bei minimalem Materialaufwand eine bestmögliche Knickfestigkeit des Festkörperelements zu erreichen, ist der weitere Bereich vorzugsweise im Wesentlichen in der Mitte zwischen dem ersten Ende und dem zweiten Ende des Festkörperelements angeordnet.

Um das Auftreten von Drehbewegungen zu vermeiden, die zu einem Spiel in der Kraftübertragung führen würden, sind das erste Ende und/oder das zweite Ende des Festkörperelements zweckmäßig für eine verdrehsichere Befestigung bzw. Verbindung ausgebildet.

Für eine kostengünstige Herstellung und um eine Bestmögliche Steifigkeit des Festkörperelements zu gewährleisten, ist dieses in einer weiteren Ausführungsform bevorzugt einstückig ausgeführt. Vorteilhaft wird das Festkörperelement in Stanzbiegetechnologie hergestellt, die eine einfache und preiswerte Herstellung gestattet.

Zur kosteneffizienten Ausführung der elektromechanischen Bremsvorrichtung mit handelsüblichen Komponenten umfasst der Antrieb vorteilhaft einen Elektromotor und ein Getriebe, wobei das Getriebe hierbei dazu ausgebildet ist, die Drehbewegung des Elektromotors in eine Linearbewegung eines Getriebeelements zu übersetzen. Das Getriebe kann von einem vorzugsweise spielfreien Spindeltrieb gebildet werden, dass eine effektive Umsetzung einer Drehbewegung in eine Linearbewegung bei geringen Reibungsverlusten ermöglicht.

Weitere Merkmale der Erfindung ergeben sich aus der folgenden Beschreibung erfindungsgemäßer Ausführungsbeispiele in Verbindung mit den Ansprüchen sowie den Figuren. Die einzelnen in der Beschreibung und den Patentansprüchen angegebenen Merkmale können bei einer Ausführungsform gemäß der Erfindung je für sich oder auch zu mehreren verwirklicht sein. Bei der nachfolgenden Erläuterung einiger Ausführungsbeispiele der Erfindung wird auf die beiliegenden Figuren Bezug genommen, von denen

Figur 1 in einer nicht maßstabsgetreuen Prinzipdarstellung eine elektromechanische Keilbremse mit einer bevorzugten Ausführungsform einer Kopplungsvorrichtung in einer Seitenansicht veranschaulicht,

Figur 2a eine Seitenansicht der Kopplungsvorrichtung von Fi- gur 1 in einer Prinzipdarstellung zeigt,

Figur 2b eine Draufsicht der Kopplungsvorrichtung von Fi- gur 1 in einer Prinzipdarstellung zeigt, und

Figur 3 die Auslenkung der Kopplungsvorrichtung von Figur 1 bei Querbelastung veranschaulicht.

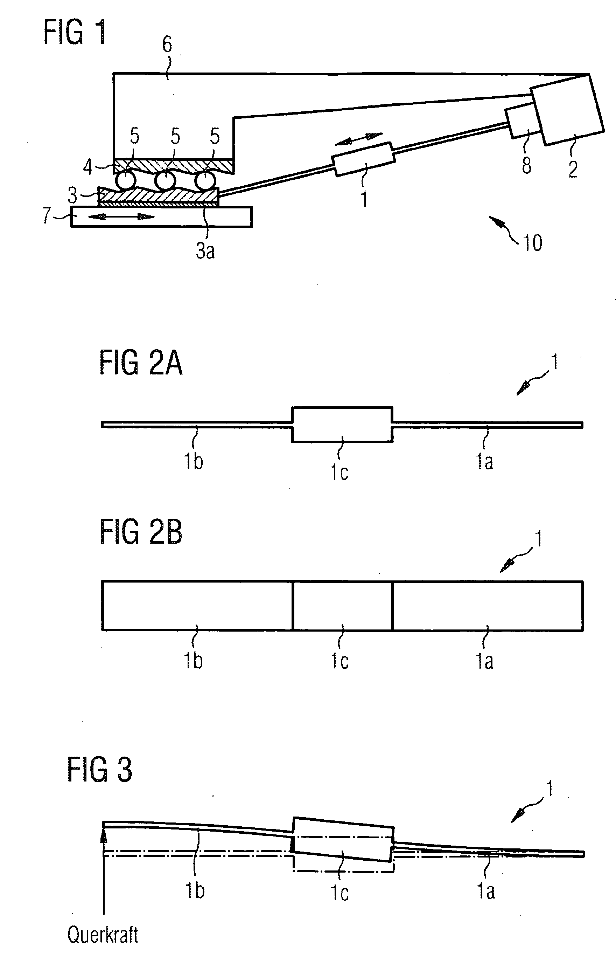

Die in der Schemazeichnung von Figur 1 veranschaulichte elektromechanische Bremse 10 weist einen Aktuator 2 auf, an dem ein Getriebe 8 zur Umsetzung der Drehbewegung des Aktuators in eine Linearbewegung angebracht ist. Aktuator 2, beispielsweise ein Elektromotor, und Getriebe bilden zusammen einen Antrieb zum Erzeugen einer Linearbewegung für das Einbringen einer Kraft $F_M$ in die Bremsanordnung. Eine Kopplungsvorrichtung 1 verbindet das Getriebe 8 mit einer aktiven Keilplatte 3, an deren, dem abzubremsenden Gegenstand 7 zugewandten, Seite ein Bremsbelag 3a angebracht ist. Die als Bremsklotz fungierende Keilplatte 3 stützt sich über Wälzkörper 5 an einer passiven Keilplatte 4 ab. Letztere ist über eine Trägervorrichtung 6 fest mit dem Aktuator verbunden.

Der Aktuator 2 wird vorzugsweise von einem Elektromotor gebildet, dessen Drehachse außerhalb des Gehäuses zugänglich ist. Zur Umsetzung der Drehbewegung der Motorachse in eine Linearbewegung kann an der Motorachse ein Getriebe 8 in Form eines Spindeltriebs, beispielsweise eine Kugelgewindespindel oder eine Rollengewindespindel angebracht sein. Alternativ kann die Motordrehachse außerhalb des Motorgehäuses selbst als Spindeltrieb ausgebildet sein. Auf dem Gewinde der Spindel ist mit bekannten Techniken eine Spindelmutter verdrehsicher und spielfrei aufgebracht. Eine Rotation der Spindel führt so zu einer Linearbewegung der Spindelmutter. Selbstverständlich können statt eines Spindeltriebs auch andere geeignete Getriebearten verwendet werden.

Die über das Getriebe 8 erzeugte Linearbewegung wird über eine oder mehrere Kopplungsvorrichtungen 1 an die aktive Keilplatte 3 übertragen. An den sich einander gegenüberliegenden Flächen der Keilplatten 3 und 4 sind Keilflächen ausgebildet, an denen Wälzkörper 5 anliegen. Die Linearverschiebung der Keilplatte 3 bewirkt ein Abrollen der Wälzkörper auf den Keilflächen der beiden Keilplatten in der Art, dass sich der Abstand zwischen den beiden Keilplatten verändert. Je nach Ausgangslage und Verschieberichtung der Keilplatte 3 wird diese durch die Abrollbewegung zu dem abzubremsenden Gegenstand 7 hin oder von diesem weggeführt. Bei Kraftfahrzeugen wird der abzubremsende Gegenstand 7 im Allgemeinen von einer Bremsscheibe gebildet.

Als Kopplungsvorrichtung 1 sind eine oder mehrere balken- oder stabförmige Festkörperelemente vorgesehen, die ein linear verschiebbares Glied des Getriebes 8, beispielsweise die Spindelmutter eines Spindeltriebs, mit der aktiven Keilplatte 3 verbinden. Die Verbindung kann über eine direkte Befestigung eines Endes der Kopplungsvorrichtung 1 mit der aktiven Keilplatte 3 erfolgen, sie kann alternativ hierzu auch über eine Befestigung des Endes der Kopplungsvorrichtung 1 mit einem mit der Keilplatte fest verbundenem Teil oder Gruppe von Teilen vorgenommen werden. Das bzw. jedes der mehreren Festkörperelemente 1 ist hierzu an einem Ende mit dem linear verschiebbaren Glied des Getriebes 8 oder einem oder einer Gruppe von daran befestigten Teilen verbunden. Am in seiner Längsrichtung gegenüberliegenden Ende ist das Festkörperelement an der aktiven Keilplatte 3 oder an einer starr damit verbundenen Halterung befestigt. Die Befestigungen sind an beiden Enden zweckmäßig biegefest und verdrehsicher ausgeführt. Die Befestigung kann hierbei zweckmäßig formschlüssig, stoffschlüssig oder kraftschlüssig ausgeführt sein.

Um eine Auslenkung der Festkörperelemente in einer Richtung senkrecht zu ihrer Längsrichtung zu ermöglichen, weisen diese Festkörperelemente eine Querschnittsgeometrie auf, deren Biegesteifigkeit in einer ersten Richtung wesentlich kleiner ist als in einer zweiten, im Wesentlichen senkrecht dazu angeordneten. Dadurch weisen die die Festkörperelemente eine flache Struktur auf, wodurch diese ähnlich einer Blattfeder in diese erste Richtung gebogen werden können. In den anderen Richtungen garantiert die Geometrie dagegen eine große Biegesteifigkeit der Struktur.

In den Figuren 2a und 2b ist ein Beispiel für eines, diesen Anforderungen genügenden restkörperelements 1 skizziert. Figur 2a zeigt das Festkörperelement 1 in einer schematisierten Seitenansicht und Figur 2b in einer schematisierten Draufsicht.

Das in den Figuren dargestellte Festkörperelement 1 setzt sich aus einem flachen, quaderförmigen Grundkörper und einer, im Bereich dessen Mitte angeordneten Verdickung 1c zusammen. Die Verdickung 1c ist nicht notwendiger Bestandteil des Festkörperelements, sie verbessert jedoch, wie weiter unten noch näher erläutert werden wird, die Knickbeständigkeit der Kopplungsvorrichtung 1. Natürlich können als Festkörperelemente 1 statt der gezeigten quaderförmigen Geometrie auch andere flach ausgebildete, längliche Strukturen verwendet werden.

Die Ausbildung der Kopplungsvorrichtung als flache, balken- oder stabförmige Festkörper, deren Enden starr mit einem linear verschiebbaren Glied des Getriebes 8 und der aktiven Keilplatte 3 verbunden sind, garantiert die geforderte spielfreie Übertragung einer Linearbewegung von dem Getriebe 8 auf die Keilplatte 3.

Bei einer Vorwärtsbremssituation wird die Keilplatte 3 in die Richtung der Bewegung des anzubremsenden Gegenstands 7 und zu diesem hingeführt. Bei Kraftfahrzeugen müssen bei einer Vorwärtsbremsung teilweise Druckkräfte $F_M$ mit Werten in der Größenordnung von etwa 10 kN und unter Umständen auch mehr in die aktive Keilplatte 3 eingebracht werden. Weisen diese Druckkräfte eine Komponente quer zur Längsrichtung der Festkörperelemente 1 auf, so können die Festkörperelemente 1 unter Umständen durch Knickung versagen.

Abgesehen davon, dass durch Verwendung mehrerer Festkörperelemente 1 in der Kopplungsvorrichtung die Last verteilt werden kann und damit pro Element geringer ausfällt, kann das Auftreten entsprechender Querkräfte ausgeschlossen werden, indem die Längsrichtung der Festkörperelemente 1, die entlang der Verbindungsachse zwischen der Befestigung am linear verschiebbaren Glied des Getriebes 8 und der Befestigung an der aktiven Keilplatte 3 verläuft, parallel zur Neigung der Keilflächen angeordnet wird, auf denen die Wälzkörper 5 bei einer Vorwärtsbremsung abrollen.

Druckkräfte treten nur bei Reibungszahlen $\mu$ von kleiner $\tan\alpha$ auf. Wird der kritische Wert von $\mu=\tan\alpha$ über-schritten, so werden die Festkörperelemente 1 durch Zugkräfte belastet. Hierbei können keine strukturschädigenden Knicklasten auftreten, so dass außer einer ausreichenden Festigkeit der Festkörperelemente 1 keine besonderen konstruktiven Merkmale berücksichtigt werden müssen.

Bei einer Rückwärtsbremssituation liegen unterschiedliche Verhältnisse gegenüber der Vorwärtsbremssituation vor. Hier wird die Keilplatte bei der Annäherung an den anzubremsenden Gegenstands 7 entgegen dessen Bewegungsrichtung geführt. Die Keilplatte weist bei dieser Bewegungsrichtung eine Bewegungskomponente senkrecht zur Längsrichtung der Festkörperelemente 1 auf. Die Festkörperelemente 1 sind daher zweckmäßig so angeordnet, dass die Richtung dieser Bewegungskomponente im Wesentlichen senkrecht auf die Breitseite der Festkörperelemente in Richtung deren geringster seitlicher Ausdehnung weist, und die Festkörperelemente 1 somit leicht über ihre Schmalseite gebogen werden können und der Bewegung wie ein Festkörpergelenk nachgeben. Die Biegung erfolgt dabei so, dass die Schmalseiten der Festkörperelemente 1 gekrümmt werden.

Wie bereits angesprochen treten bei einer Vorwärts- und Rückwärtsbremssituation hohe Druckkräfte entlang der Längsrichtung der Festkörperelemente auf. Unter der Wirkung dieser Druckkräfte können an den Festkörperelementen 1 Biegemomente auftreten, die zu einem Verlust der Stabilität dieser Elemente führen. Der Verlust der Stabilität äußert sich darin, dass ab einer bestimmten, als Knicklast bezeichneten Belastung eine mit der Belastung rasch wachsende Formänderung der Festkörperelemente 1 auftritt. Nach Leonard Euler (1707-1783) kann die Knickkraft eines Stabes oder eines Balkens der Länge 1 durch die Gleichung

$$F_K \;=\; \pi^2 EI/(\beta l)^2 \qquad\qquad\qquad\qquad\qquad (3)$$

dargestellt werden, wobei E das Elastizitätsmodul des Stabes bzw. Balkens, I das Flächenträgheitsmoment dessen Querschnitts und $\beta$ den Knicklängenbeiwert darstellen. Der Wert des Letzteren ist davon abhängig, wie die Enden des Stabes bzw. Balkens gelagert sind. Aus Gleichung (3) ist ersichtlich, dass die Knickkraft, d.h. die zum Knicken der Struktur erforderliche Druckkraft proportional dem Quadrat der Länge 1 der Struktur abnimmt.

Um die Knicklast bei gegebener Länge zu erhöhen, kann nach Gleichung (3) das Flächenträgheitsmoment I des Stab- bzw. Balkenquerschnitts vergrößert werden, den das Flächenträgheitsmoment bildet ein Maß für den Widerstand eines Querschnitts gegen Biegung. Das Flächenträgheitsmoment nimmt mit zunehmender Querschnittfläche zu.

Die Geometrie des in den Figuren dargestellten Festkörperelements 1 macht dabei von der Erkenntnis gebrauch, dass eine Querschnittsvergrößerung nur dort erforderlich ist, wo das größte Biegemoment zu erwarten ist. Bei einer an beiden Enden eingespannten stab- oder balkenförmigen Struktur tritt das größte Biegemoment in der Mitte auf. Der Querschnitt muss zur Erhöhung der Knicklast daher nicht notwendigerweise über die gesamte Länge eines Festkörperelements vergrößert werden. Es genügt, die Struktur der Festkörperelemente 1 in der Mitte ihrer Längsausdehnung zu verdicken, wie an dem in den Figuren 2a und 2b dargestellten Festkörperelement 1 beispielhaft veranschaulicht ist.

In der Mitte des dargestellten Elements befindet sich eine quaderförmige Struktur 1c mit derselben Breite aber einer wesentlich größeren Dicke als sie die flache Grundstruktur des Festkörperelements aufweist. Die Breite der Struktur kann aber auch geringer oder größer als die der Grundstruktur ausgeführt sein. Andere Verdickungen, mit z.B. linsenförmiger, lang gestreckt linsenförmiger, zylindrischer oder dergleichen mehr Geometrien, sind ebenso möglich. Die Verdickungen, ob als Voll- oder Hohlkörper ausgebildet, dienen einem erhöhten Flächenträgheitsmoment und bilden damit einen höheren Widerstand .gegen Biegung, womit eine erhöhte Steifigkeit der Festkörperelemente im Bereich um die Mitte des jeweiligen Festkörperelements erzielt wird.

Auf diese Weise werden die Festkörperelemente 1 in drei Segmente unterteilt, wobei die äußeren beiden Bereiche in einer Richtung biegeweich und der mittlere Bereich biegestarr ausgebildet sind. Jeder der beiden äußeren Bereiche ist kürzer als die halbe Länge eines Festkörperelements 1, sodass die Verdickung nach Gleichung 3 eine Erhöhung der Knicklast um mehr als einen Faktor 4 bewirkt.

Der biegestarre Bereich behindert jedoch nicht die Auslenkung des Festkörperelements 1 bei einer Rückwärtsbremssituation. Dies ist in der Figur 3 veranschaulicht, bei der das unter Einwirkung einer Querkraft ausgelenkte Festkörperelement (durchgehende Linie) im Vergleich zum nicht ausgelenkten (gestrichelte Linie) dargestellt ist. Bei der hierbei auftretenden Querbelastung verbiegen sich im Wesentlichen die zu diesem Zweck schmal, d.h. gegenüber der angreifenden Querkraft mit geringer Steifigkeit, ausgeführten äußeren Bereiche der Festkörperelemente 1. Der mittlere Bereich ist im Wesentlichen formstabil, behindert die Auslenkung der beiden Enden relativ zueinander dabei jedoch nicht, sondern unterstützt sie, indem er wie ein Hebel die inneren Enden der äußeren Bereiche richtungserhaltend miteinander verbindet.

Die vorgestellte, als Festkörperelement ausgeführte Kopplungsvorrichtung 1 bietet eine knicksichere und gelenkige Verbindung von einem Aktuator bzw. einem daran angebrachten Getriebe zu einer aktiven Keilplatte einer elektromechanischen Keilbremse. Für eine kostengünstige Herstellung wird das Festkörperelement einstückig ausgeführt, wobei vor allem die Stanzbiegetechnologie eine einfache und preiswerte Herstellung gestattet.

Bezugszeichenliste

| 1 | Kopplungsvorrichtung |
|---|---|
| 1a | äußerer Bereich des Festkörperelements mit erstem Ende |
| 1b | äußerer Bereich des Festkörperelements mit zweitem Ende |
| 1c | weiterer Bereich des Festkörperelements mit verdick- tem Querschnitt |
| 2 | Aktuator |
| 3 | aktive Keilplatte |
| 4 | passive Keilplatte |
| 5 | Wälzkörper |
| 6 | Trägervorrichtung |
| 7 | abzubremsender Gegenstand, Bremsscheibe |
| 8 | Vorrichtung zur Umsetzung der Drehbewegung des Aktu- ators |
| 10 | elektromechanische Bremse |

**Patentansprüche**

**1.** Elektromechanische Bremsvorrichtung mit

- einem Antrieb (2, 8), der zum Umwandeln elektrischer Energie in eine mechanische Linearbewegung ausgebildet ist,
- einer aktiven Keilplatte (3), die auf einen abzubremsenden Gegenstand (7) zu oder hiervon weg bewegbar ist,
- einer passiven Keilplatte (4), die mit dem elektrischen Antrieb (2, 8) in einer feststehenden Anordnung verbunden ist,
- einem oder mehreren Wälzkörpern (5), die so zwischen der aktiven Keilplatte (3) und der passiven Keilplatte (4) angeordnet sind, dass sie jeweils einander gegenüber angeordnete Keilflächen der aktiven und der passiven Keilplatte berühren,

wobei zur Übertragung der von dem Antrieb (2, 8) erzeugten Linearbewegung auf die aktive Keilplatte (3) eine Kopplungsvorrichtung zwischen dem Antrieb (2, 8) und der aktiven Keilplatte (3) angeordnet ist,
welche zumindest ein Festkörperelement (1) mit einem ersten, zur Verbindung mit dem Antrieb ausgebildeten Ende und einem zweiten, zur Verbindung mit der Keilplatte ausgebildeten Ende umfasst,
**dadurch kennzeichnet, dass**
das erste Ende starr mit einem linear verschiebbaren Glied des Antriebs (2, 8) und das zweite Ende starr mit der aktiven Keilplatte (3) verbunden ist, und dass
das Festkörperelement (1) einen ersten oder mehrere erste Bereiche (1a, 1 b) mit einem Querschnitt aufweist, dessen Biegesteifigkeit in einer ersten Richtung wesentlich kleiner ist als dessen Biegesteifigkeit in einer zweiten, senkrecht zur ersten Richtung angeordneten Richtung,
wobei die erste Richtung derart angeordnet ist, dass bei einer Auslenkung des Festkörperelements (1) in dieser Richtung die aktive Keilplatte (3) auf den abzubremsenden Gegenstand (7) zu oder hiervon weg bewegt wird.

2.  Elektromechanische Bremsvorrichtung nach Anspruch 1,
**dadurch gekennzeichnet,**
**dass** das Festkörperelement (1) einen weiteren Bereich (1c) aufweist, dessen Biegesteifigkeit in der ersten Richtung größer als die Biegesteifigkeit des Festkörperelements (1) in dieser Richtung in dem einen ersten Bereich oder den mehreren ersten Bereichen ist.

3.  Elektromechanische Bremsvorrichtung nach Anspruch 2,
**dadurch gekennzeichnet,**
**dass** der weitere Bereich (1c) im Wesentlichen in der Mitte zwischen dem ersten Ende und dem zweiten Ende des Festkörperelements angeordnet ist.

4.  Elektromechanische Bremsvorrichtung nach Anspruch 1, 2 oder 3,
**dadurch gekennzeichnet,**
**dass** das erste Ende und/oder das zweite Ende des Festkörperelements (1) für eine verdrehsichere Befestigung bzw. Verbindung ausgebildet sind.

5.  Elektromechanische Bremsvorrichtung nach einem der vorangehenden Ansprüche,
**dadurch gekennzeichnet,**
**dass** das Festkörperelement (1) einstückig ausgeführt ist.

6.  Elektromechanische Bremsvorrichtung nach einem der vorangehenden Ansprüche,
**dadurch gekennzeichnet,**
**dass** das Festkörperelement (1) in Stanzbiegetechnologie hergestellt ist.

7.  Elektromechanische Bremsvorrichtung nach einem der vorangehenden Ansprüche,
**dadurch gekennzeichnet,**
**dass** der Antrieb einen Elektromotor (2) und ein Getriebe (8) umfasst, wobei das Getriebe ausgebildet ist, die Drehbewegung des Elektromotors in eine Linearbewegung eines Getriebeelements zu übersetzen.

8.  Elektromechanische Bremsvorrichtung nach Anspruch 7,
**dadurch gekennzeichnet,**
**dass** das Getriebe (8) von einem Spindeltrieb gebildet wird.

9.  Elektromechanische Bremsvorrichtung nach Anspruch 8,
**dadurch gekennzeichnet,**
**dass** der Spindeltrieb im Wesentlichen spielfrei ausgebildet ist.

**Claims**

1. Electromechanical brake device with

   - a drive (2, 8) which is designed for converting electrical energy into a mechanical linear movement,
   - an active wedge plate (3), which can be moved towards or away from an object to be braked,
   - a passive wedge plate (4) which is connected to the electrical drive (2, 8) in a fixed arrangement,
   - one or a plurality of rolling bodies (5) which are arranged between the active wedge plate (3) and the passive wedge plate (4) such that they respectively touch wedge surfaces, arranged opposite one another, of the active and the passive wedge plate,

   with, for transmitting the linear movement generated by the drive (2, 8) onto the active wedge plate (3), a coupling device being arranged between the drive (2, 8) and the active wedge plate (3),
   which comprises at least one fixed-body element (1) with a first end embodied so as to connect with the drive and a second end embodied so as to connect with the wedge plate, **characterised in that**
   the first end is rigidly connected to a linearly displaceable element of the drive (2, 8) and the second end is rigidly connected to the active wedge plate (3) and that the fixed-body element (1) has a first or a plurality of first regions (1a, 1b) with a cross section whose flexural rigidity in a first direction is substantially smaller than its flexural rigidity in a second direction which is arranged substantially perpendicular to the first direction,
   with the first direction being arranged such that if the fixed-body element (1) deviates in this direction, the active wedge plate (3) is moved towards or away from the object (7) to be braked.

2. Electromechanical brake device according to claim 1,
   **characterised in that**
   the fixed-body element (1) has a further region (1c) whose flexural rigidity in the first direction is greater than the flexural rigidity of the fixed-body element (1) in this direction in the one first region or in the plurality of first regions.

3. Electromechanical brake device according to claim 2,
   **characterised in that**
   the further region (1c) is arranged substantially centrally between the first end and the second end of the fixed-body element.

4. Electromechanical brake device according to 1, 2 or 3,
   **characterised in that**
   the first end and/or the second end of the fixed-body element (1) is/are designed for fastening or connecting in a rotationally secure manner.

5. Electromechanical brake device according to one of the preceding claims,
   **characterised in that**
   the fixed-body element (1) is embodied in one piece.

6. Electromechanical brake device according to one of the preceding claims,
   **characterised in that**
   the fixed-body element (1) is manufactured using punching and bending technology.

7. Electromechanical brake device according to one of the preceding claims,
   **characterised in that**
   the drive includes an electric motor (2) and a gear (8), with the transmission being embodied to convert the rotational movement of the electric motor into a linear movement of a gear element.

8. Electromechanical brake device according to claim 7,
   **characterised in that**
   the gear (8) is composed of a spindle drive.

9. Electromechanical brake device according to claim 8,
   **characterised in that**
   the spindle drive is designed so as to be substantially play-free.

**Revendications**

1. Dispositif de freinage électromécanique, comprenant :

   - un entraînement (2, 8) conçu pour convertir de l'énergie électrique en un mouvement mécanique linéaire,
   - une plaque de calage active (3) pouvant être avancée sur un objet (7) à freiner ou en être écartée,
   - une plaque de calage passive (4) raccordée à l'entraînement électrique (2, 8) dans un agencement fixe,
   - au moins un corps de roulement (5) disposé entre la plaque de calage active (3) et la plaque de calage passive (4) de manière que le ou chaque corps de roulement (5) touche des surfaces de calage, agencées respectivement l'une en regard de l'autre, des plaques de calage active et passive,

   dans lequel est aménagé, pour la transmission du mouvement linéaire généré par l'entraînement (2, 8) sur la plaque de calage active (3), un dispositif de couplage entre l'entraînement (2, 8) et la plaque de calage active (3) , qui comprend au moins un élément à corps solide (1) comprenant une première extrémité conformée pour le raccordement à l'entraînement et une seconde extrémité conformée pour le raccordement à la plaque de calage, **caractérisé en ce que** la première extrémité est raccordée de manière rigide à un élément déplaçable linéairement de l'entraînement (2, 8) et la seconde extrémité est raccordée de manière rigide à la plaque de calage active (3), et **en ce que** l'élément à corps solide (1) présente au moins une première zone (1a, 1b) avec une section transversale, dont la rigidité à la flexion dans une première direction est sensiblement inférieure à sa rigidité à la flexion dans une seconde direction perpendiculaire à la première direction, dans lequel la première direction est agencée de sorte que, lors d'une déviation de l'élément à corps solide (1) dans cette direction, la plaque de calage active (3) soit avancée sur l'objet (7) à freiner ou en soit écartée.

2. Dispositif de freinage électromécanique selon la revendication 1, **caractérisé en ce que** l'élément à corps solide (1) présente une autre zone (1c), dont la rigidité à la flexion dans la première direction est supérieure à la rigidité à la flexion de l'élément à corps solide (1) dans cette direction dans la ou chaque première zone.

3. Dispositif de freinage électromécanique selon la revendication 2, **caractérisé en ce que** l'autre zone (1c) est aménagée sensiblement au milieu entre la première extrémité et la seconde extrémité de l'élément à corps solide.

4. Dispositif de freinage électromécanique selon la revendication 1, 2 ou 3, **caractérisé en ce que** la première extrémité et/ou la seconde extrémité de l'élément à corps solide (1) est ou sont conformées pour une fixation ou un raccordement antigiratoire.

5. Dispositif de freinage électromécanique selon l'une quelconque des revendications précédentes, **caractérisé en ce que** l'élément à corps solide (1) est formé d'un seul tenant.

6. Dispositif de freinage électromécanique selon l'une quelconque des revendications précédentes, **caractérisé en ce que** l'élément à corps solide (1) est fabriqué par une technologie de flexion par estampage.

7. Dispositif de freinage électromécanique selon l'une quelconque des revendications précédentes, **caractérisé en ce que** l'entraînement comprend un moteur électrique (2) et une transmission (8), dans lequel la transmission est conformée pour convertir le mouvement de rotation du moteur électrique en un mouvement linéaire d'un élément de transmission.

8. Dispositif de freinage électromécanique selon la revendication 7, **caractérisé en ce que** la transmission (8) est formée par un système d'entraînement à vis.

9. Dispositif de freinage électromécanique selon la revendication 8, **caractérisé en ce que** la commande à broche est réalisée sensiblement sans jeu.

FIG 1

6

5   5   5

4

3

7

3a

8   2

1

10

FIG 2A

1

1b          1c          1a

FIG 2B

1

1b          1c          1a

FIG 3

1

1b          1c          1a

Querkraft

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0953785 A
- WO 03056204 A